# EUROPEAN PATENT APPLICATION

(11) **EP 4 488 650 A1**
(43) Date of publication of application: **08.01.2025**
(21) Application number: 23184157.8
(22) Date of filing: 07.07.2023
(51) Int. Cl.: G01M 5/00, G01N 3/04, G01N 3/08

(54) **APPARATUS FOR TESTING CABLES**

(71) Applicant: Osbit Limited, Riding Mill, Northumberland NE44 6AW (GB)
(72) Inventor: The designation of the inventor has not yet been filed
(74) Representative: Murgitroyd & Company

(57) **Abstract**

An apparatus 20 for testing cables comprises housing assembly 22, an elongate member support assembly 24 and at least one tensioning means 26 configured to apply tension to a cable in use (not shown). Tensioning means 26 is mounted to the elongate member support assembly 24 such that applying tension to the cable causes a reaction compression in the elongate member support assembly 24. The elongate member support assembly 24 is moveable relative to the housing assembly 22. Elongate member support assembly 24 comprises three pivotally interconnected arms 24a, 24b and 24c. At the end of arms 24a and 24c, tensioning means 26 to apply tension to a cable in use are located.

## Description

The present disclosure relates to an apparatus for testing elongate members, such as cables and pipes.

Subsea Power Cables are used to transfer power from offshore wind turbines to sub-stations and from offshore sub-stations to land. Cables are a significant part of the cost of installing a windfarm. Such cables can be unreliable if not constructed and installed correctly and the cost of subsea cable repair is very high. It is therefore desirable to test the durability of elongate members such as subsea power cables and pipes.

Until recently, offshore wind turbine generators have been fixed to the seabed in shallow water using a monopile foundation and in deeper water, a jacket. As the adoption of offshore wind power becomes more widespread, there is a need to construct wind farms in deeper water or where the seabed is otherwise unsuitable for foundation installation. Here, floating wind turbine generators are used. The floating foundation is anchored to the seabed using an array of chains or cables. Because it is floating the wind turbine generator moves up and down with the tide, moves laterally to allow its tethers to react loads from current and wind and pitches and rolls with the waves. The cable that connects the wind turbine generator with the sub-station has to compensate for this relative motion between seabed and the floating foundation.

Power cables are designed to be flexible, they need to bend to be transported and during installation. Once installed further bending is usually minimal on fixed bottom applications. Motions between the seabed and a floating foundation are consistently frequent and often accommodated by creating an S-shape in the cable. The S-shape is supported by a mid-water arch to control the bend radius. To compensate for the motion the S-shape in the cable is continuously changing, bending the cable continuously throughout its life.

If subjected to a large number of bend cycles, a power cable can fail through fatigue. Fatigue failure can be in the metal of the armour wire, causing reduction in tensile strength and prevention of even bending, in the metal of the conductors, causing increased electrical resistance or by fretting of the insulation causing a short. To qualify a cable for a floating wind farm, a power cable must be fatigue tested. During the fatigue test, physical and electrical integrity of the cable is continuously monitored.

In January 2022, The International Council on Large Electric Systems (CIGRE) published a new document Ref:862 "Recommendations for mechanical testing of submarine cables for dynamic applications*".* The document describes tests that are required to qualify a cable. There are two principals that can be applied when testing a cable, the bend can be controlled by using a rigid former set at the cable bend test radius, or by using a flexible bend stiffener. The bend former method is best used to characterise the power cable and the bend stiffener is best used when there is a power cable termination system to be tested.

CIGRE 862 also recommends that the cable is tested under representative tension. During a test the tension is applied to the cable using an end termination. This would typically consist of a conical collar placed around the cable armour and potted onto the cable using an epoxy resin.

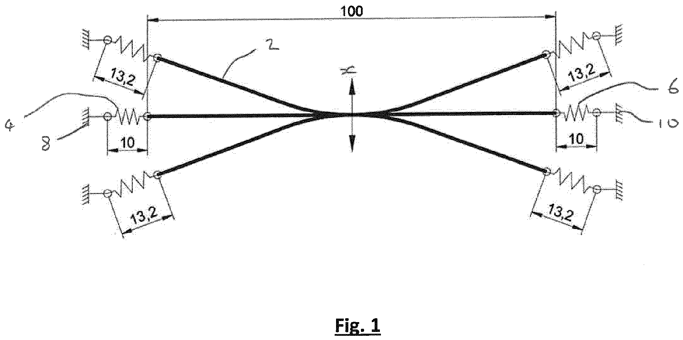

Figure 1 is a schematic of a known apparatus for testing a cable 2. A cable 2 100 units long is mounted between two tensioning springs 4 and 6. The tensioning springs 4 and 6 are connected to anchor points 8 and 10 which are supported by the housing of the apparatus and are moveable up and down in a direction parallel to axis X to flex the cable as shown. Alternatively, anchor points 8 and 10 may remain stationary whilst cable 2 is flexed at its centre up and down to deform springs 4 and 6. This provides the same relative movement.

In order to flex the cable by the required amount, each spring 4 and 6 must extend from an initial 10 units of extension at the straight configuration to an extension of 13.2 units at the upper and lowermost extents of the flex.

This configuration suffers from several disadvantages. Firstly, the spring must provide a constant tension to the cable to replicate conditions in the field and provide a valid test. The spring constant is defined as the force applied per unit extension. Where extension is large, the spring must have a very flat spring constant, i.e. a small change in tension that applies over a long extension. This can be difficult to provide and requires low friction in the spring system.

Secondly, the tension in the cable is reacted by the anchor points 8 and 10 at each end which requires a very strong frame to carry this load, particularly when bending away from the centre line of the cable. Such test rigs are therefore large and the apparatus requires a very strong structure anchored to the ground. This is costly to provide and means that the test rig cannot be readily moved.

Thirdly, the greater the extension of the spring, the more energy must be provided by the test apparatus which significantly increases operating costs for large spring extensions.

Preferred embodiments of the present disclosure seek to overcome the above disadvantages of the prior art.

According to an aspect of the present disclosure, there is provided an apparatus for testing elongate members, the apparatus comprising:
an elongate member support assembly disposed substantially adjacent to and extending the length of an elongate member in use;
at least one tensioning means configured to apply tension to said elongate member, wherein said at least one tensioning means is mounted to said elongate member support assembly such that applying tension to said elongate member causes a reaction compression in said elongate member support assembly; and
wherein said elongate member support assembly is moveable relative to a housing assembly in which the apparatus is disposed.

By providing a elongate member support assembly extending the length of an elongate member under test and which is compressed by the tensioning means, and wherein the elongate member support assembly is moveable relative to a housing assembly in which the apparatus is disposed, this provides the advantage that the structure of the apparatus can be much lighter resulting in a lower cost. This is because the reaction force of the cable tensioning means is not required to be absorbed by the housing assembly supporting the apparatus, rather it is redirected internally into a compression in the apparatus.

In addition, since the elongate member support assembly is moveable relative to the housing assembly which means that the tensioning means is also moveable, the spring extension required is much lower than that of known test apparatuses. This means that a spring having a flat spring constant over a long extension is not required to provide constant tension to the elongate member being tested.

Furthermore, the reduction in spring length change for each cycle is advantageous by greatly reducing the amount of energy required to drive the apparatus, leading to a lower cost drive train and lower operating costs.

In a preferred embodiment, said elongate member support assembly comprises a plurality of pivotally interconnected support arms.

This provides the advantage that the apparatus can be configured to be used with two, three or more support arms depending on the particular requirements of the test.

The apparatus may further comprise first and second pluralities of pivotally interconnected support arms disposed in parallel.

This provides the advantage of increasing the strength of the assembly.

In a preferred embodiment, an end of at least one of said plurality of pivotally interconnected support arms is moveable relative to said housing assembly.

This provides the advantage of enabling the tensioning means to remain substantially stationary relative to an end of the elongate member being tested.

The apparatus may be configured to move a centre portion of an elongate member being tested reciprocably along a first axis, wherein portions towards the ends of said elongate member being tested are restricted to only move along a plane lying perpendicular to said first axis.

This provides the advantage that by retaining an end of an elongated member such as a cable under test stationary, cable cores can be accessed for electrical testing whilst the cable is being bend cycled.

The apparatus may further comprise first and second tensioning means disposed at opposite ends of said elongate member support assembly.

The elongate member support assembly may further comprise at least one guide member shaped to define the extent of curvature of an elongate member in use.

The apparatus may further comprise a bend stiffener surrounding an elongate member in use.

The apparatus may further comprise a housing assembly.

According to another aspect of the present disclosure, there is provided a method of testing an elongate member, the method comprising:
mounting an elongate member in an apparatus as defined above; and
operating the apparatus to repeatedly bend the elongate member under tension.

Preferred embodiments of the present disclosure will now be described, by way of example only and not in any limitative sense, with reference to the accompanying drawings in which:
Figure 1 is a schematic of a prior art apparatus for testing a cable under tension;
Figure 2a is a side view of an apparatus for testing elongate members in accordance with a first embodiment of the present disclosure, in a condition where the elongate member is substantially straight;
Figure 2b is a view corresponding to Figure 2a in which the apparatus is shown in a position to bend an elongate member to the uppermost extent of the apparatus;
Figure 2c is a side view of the apparatus of Figures 2a and 2b shown in a condition to bend the elongate member to its lowermost extent;
Figure 3a is a perspective view of the tensioning means of the apparatus of Figure 2a and Figure 5a;
Figure 4 is a schematic of the apparatus of Figure 2a demonstrating the relative movement of the various parts;
Figure 5a is a top view of an apparatus for testing elongate members in accordance with a second embodiment of the present disclosure shown in a position in which the elongate member to be tested is straight;
Figure 5b is a top view corresponding to Figure 5a showing the condition in which the elongate member is bent to the left; and
Figure 5c is a top view corresponding to Figures 5a and 5b showing the apparatus bending an elongate member to the right.

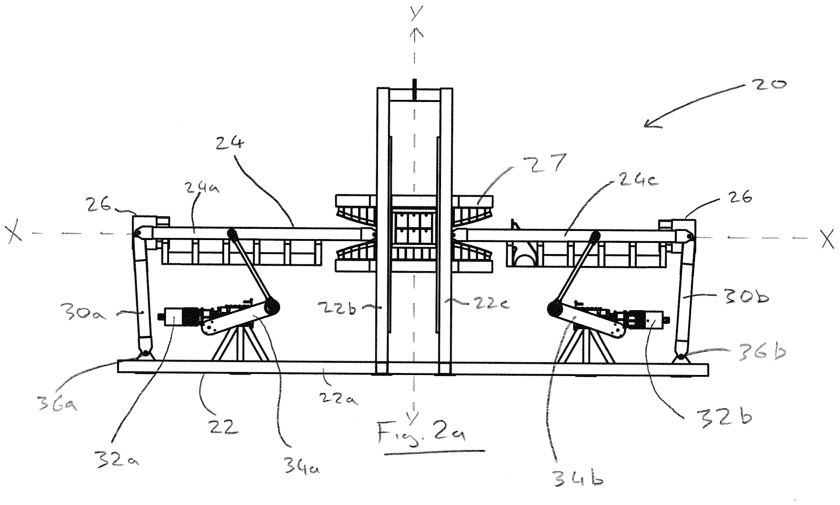

Referring to Figures 2a to 2c, an apparatus 20 for testing elongate members such as cables and pipes comprises an elongate member support assembly 24 and at least one tensioning means 26 configured to apply tension to an elongate member in use (not shown). The elongate member support assembly 24 is disposed substantially adjacent to and extends the length of an elongate member under test. Said at least one tensioning means 26 is mounted to the elongate member support assembly 24 such that applying tension to the cable causes a reaction compression in the elongate member support assembly 24. The elongate member support assembly 24 is moveable relative to a housing assembly 22 in which the apparatus is mounted.

Apparatus 20 can be used to tension and repeatedly bend a variety of elongate members such as cables and pipes to test the durability of such elongate members. For the purposes of example, apparatus 20 will be described as conducting a test on a cable, although it should be understood that any elongate member such as any type of cable or pipe could be tested by apparatus 20.

Housing assembly 22 is to be construed as to mean any housing or support means which can house apparatus 20 when it is in use. Housing assembly 22 is therefore a fixed structure such as a building or a framework mounted in a building or at a test site. Housing assembly 22 is therefore stationary whilst parts of apparatus 20 move.

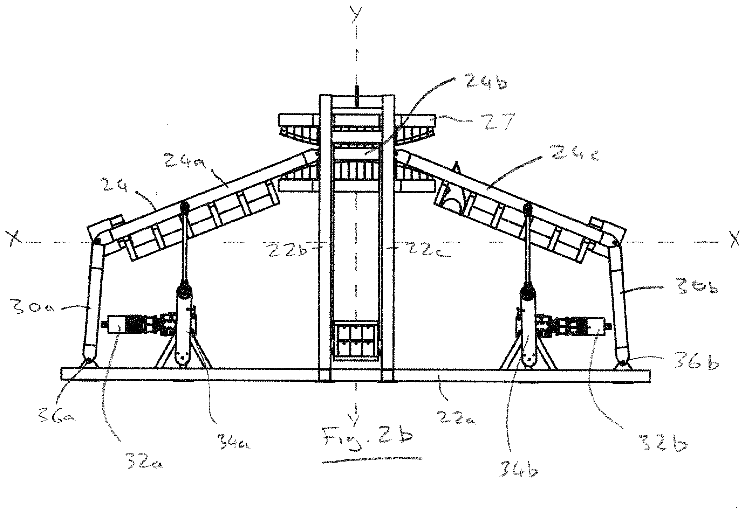

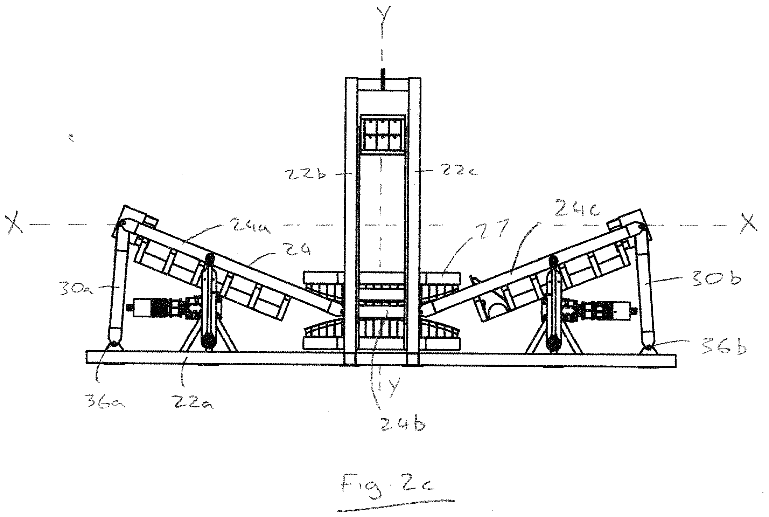

For example, housing assembly 22 may be in the form of a housing or frame structure to which the moving parts of the apparatus 20 are mounted. Base element 22a and upright supports 22b and 22c hold both the elongate member support assembly 24 and a cable guide element 27 which moves up and down along frame elements 22b and 22c to bend the cable up and down from the straight configuration of Figure 2a, to an uppermost bending extent of Figure 2b and a lowermost bending extent of Figure 2c.

Elongate member support assembly 24 comprises three pivotally interconnected arms 24a, 24b and 24c. At the end of arms 24a and 24c, tensioning means 26 to apply tension to a cable in use are located. The elongate member support assembly is mounted at each end to uprights 30a and 30b which are pivotally mounted to the base element 22a at pivot points 36a and 36b. Motors 32a and 32b are drivable to rotate crank elements 34a and 34b to slide cable guide element 27 up and down frame elements 22b and 22c. Alternatively, since the function of uprights 30a and 30b is to provide a substantially linear movement to the ends of arms 24a and 24c, uprights 30a and 30b could be slideably connected to base element 22a rather than pivotally connected to provide the same effect. Cable guide element 27 therefore reciprocates up and down along a first axis Y, which is a vertical axis in the described embodiment, and the ends of the elongate member support assembly 24 restrict portions towards the ends of an elongate member being tested to only move along a plane lying perpendicular (in axis X) to the first axis Y as the centre of the elongate member being tested moves up and down along the first axis Y. The movement along the plane lying in axis X is provided by pivoting uprights 30a and 30b or a slideable connection as described.

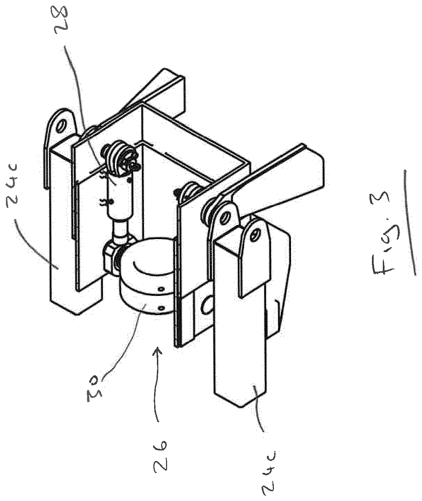

Referring to Figure 3, a tensioning means 26 is mounted to each end of elongate member support assembly 24. Figure 3 shows the tensioning means at the end of elements 24a and 24c. Tensioning means 26 uses a gas spring having a pair of hydraulic cylinders 28 pressurised with a gas accumulator (not shown) which would typically use nitrogen. The hydraulic cylinders apply tension to collar 30 which grips a cable to be tested (not shown) passing through collar 30. The cylinders are able to retract against the accumulator to accommodate changes in length without significantly altering the tension applied to the cable.

The operation of apparatus for testing a cable 20 or other elongate member will now be described with reference to Figures 2a to 2c. A cable (not shown) is mounted along elongate member support assembly 24 and in each tensioning means 26. The tensioning means 26 are then operated to tension the cable by a desired amount. For the cable to be used for offshore wind turbines, a typical amount of tension would be 10 tonnes.

The cable must be then bent repeatedly up and down over a typical time period of several months to replicate the lifetime of a cable used in an offshore wind farm. Motors 32a and 32b are driven to rotate crank elements 34a and 34b to slide cable guide element 27 up and down frame elements 22b and 22c. This movement causes the support uprights 30a and 30b to rock left and right relative to base 22a on pivots 36a and 36b. This occurs whilst tensioning means 26 tension the cable. The tension force applied to the cable is reacted by compressing elongate member support assembly 24 and therefore applying a compression to pivotally interconnected arms 24a, 24b and 24c. In addition to the reaction compression taken up by elongate member support assembly 24, there are also some proportionally smaller moments felt due to minor misalignment.

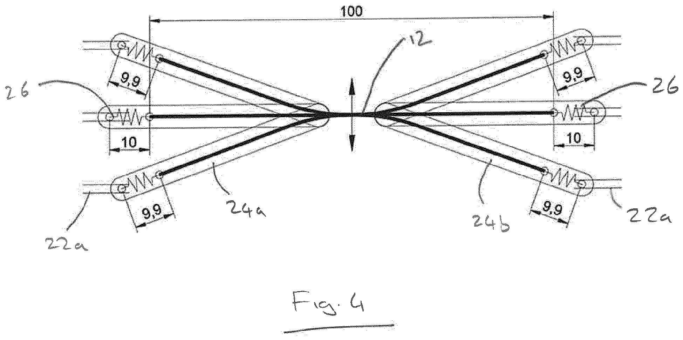

Referring to Figure 4, the net result of this configuration is shown. Because ends of support arms 24a and 24b can move relative to the base 22a of the housing assembly 22, the tensioning means 26 can also move relative to the support means which means that for a cable 12 of length 100 units, the gas spring formed by hydraulic cylinders 28 of the tensioning means 26 must only retract by 0.1 unit as compared to an extension of 3.2 units of the prior art example of Figure 1. This provides the advantages of a lighter housing assembly 22, lower energy expenditure to tension the cable and no requirement for a low spring constant over a large extension.

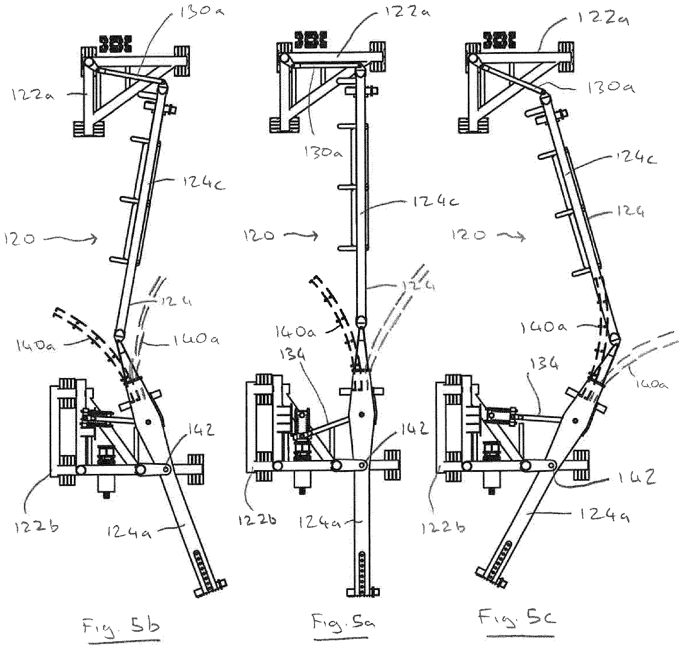

Referring to Figures 5a to 5c, a second embodiment of the apparatus is shown, with parts common to the embodiment of Figures 2a to 2c shown with like reference numerals but increased by 100.

Apparatus 120 for testing elongate members comprises a elongate member support assembly 124 having a pair of pivotally interconnected arms 124a and 124c. Tensioning means 126 are provided at the end of each arm. In this embodiment, a bend former 140a is mounted to support arm 124a to define the extent of bend of a cable in use.

The housing assembly takes the form of two frame elements 122a and 122b. Support arm 124a is pivotally interconnected to the frame element 122b and pivot point 142. A crank drive 134 is provided to move support arm 124a left and right. The relative movement between the support arms and the support means 122a is taken up by pivotal arm 130a.

Apparatus 120 can therefore be driven to bend the cable left and right to the extent defined by bend former 140a.

A bend stiffener (not shown) may be mounted to the test apparatus to enclose an end of a cable to test the cable in the configuration in which a bend stiffener is used.

It will be appreciated by persons skilled in the art that the above embodiments have been described by way of example only and not in any limitative sense, and that various alterations and modifications are possible without departure from the scope of protection as defined by the appended claims. For example, the apparatus described can be used to test elongate elements other than cables, such as pipes and can be used to test cables with an elastomeric end termination bend stiffener instead of bend formers.

## Claims

1. An apparatus for testing elongate members, the apparatus comprising:
an elongate member support assembly disposed substantially adjacent to and extending the length of an elongate member in use; and
at least one tensioning means configured to apply tension to said elongate member, wherein said at least one tensioning means is mounted to said elongate member support assembly such that applying tension to said elongate member causes a reaction compression in said elongate member support assembly; and
wherein said elongate member support assembly is moveable relative to a housing assembly in which the apparatus is disposed.

2. An apparatus according to claim 1, wherein said elongate member support assembly comprises a plurality of pivotally interconnected support arms.

3. An apparatus according to claims 2, further comprising first and second pluralities of pivotally interconnected support arms disposed in parallel.

4. An apparatus according to claim 2 or 3, wherein an end of at least one of said plurality of pivotally interconnected support arms is moveable relative to said housing assembly.

5. An apparatus according to any one of the preceding claims, the apparatus configured to move a centre portion of an elongate member being tested reciprocably along a first axis, wherein portions towards the ends of said elongate member being tested are restricted to only move along a plane lying perpendicular to said first axis.

6. An apparatus according to any one of the preceding claims, further comprising first and second tensioning means disposed at opposite ends of said elongate member support assembly.

7. An apparatus according to any one of the preceding claims, wherein the elongate member support assembly further comprises at least one guide member shaped to define the extent of curvature of an elongate member in use.

8. An apparatus according to any one of the preceding claims, further comprising a bend stiffener surrounding an elongate member in use.

9. An apparatus according to any one of the preceding claims, further comprising a housing assembly.

10. A method of testing an elongate member, the method comprising:
mounting an elongate member in an apparatus according to any one of the preceding claims; and
operating the apparatus to repeatedly bend the elongate member under tension.
